# EUROPEAN PATENT APPLICATION

(11) **EP 0 952 305 A1**
(43) Date of publication of application: **27.10.1999**
(21) Application number: 98303146.9
(22) Date of filing: 23.04.1998
(51) Int. Cl.: E21B 43/10, E21B 29/10, F16L 11/12, F16L 55/165

(54) **Deformable tube**

(71) Applicant: SHELL INTERNATIONALE RESEARCH MAATSCHAPPIJ B.V., 2596 HR Den Haag (NL)
(72) Inventor: Lohbeck, Wilheminus Christianus Maria, 2288 GD RIJSWIJK (NL)

(57) **Abstract**

A deformable tube has a wall which comprises a number of axial, toroidal or helical tubules which are at least partly deformed in response to deformation of the tube in radial and/or axial directions.

## Description

### Background of the invention

The invention relates to a deformable tube.

It is known from US patent specifications Nos. 3,353,599 and 5,014,779 to insert a corrugated tube into the wellbore of an underground borehole and to expand the tube downhole into a tubular shape.

US patent specification No. 5,366,012 discloses the expansion of a slotted pipe of which the slots open up as a result of the expansion so as to reduce the radial forces needed to expand the pipe.

The use of slotted or initially corrugated pipes has the disadvantage that the expanded pipes have a limited mechanical strength.

International patent application, publication No. WO 98/00626 discloses the expansion of an unslotted cylindrical pipe by means of an expansion mandrel.

A disadvantage of the latter expansion method is that forces to expand the pipe are relatively high and that the pipe contracts as a result of the expansion process.

It is an object of the present invention to alleviate the disadvantages of the known techniques and to provide a robust and deformable tube which can be expanded or otherwise deformed by using a relatively low deformation force.

### Summary of the Invention

The deformable tube according to the invention thereto comprises a wall which is at least partly formed by a number of tubules, wherein at least one tubule is at least partly deformed in response to deformation of the tube.

The deformation may involve flattening or other change of the tubular shape of the tubules, which requires principally bending forces which are significantly lower than the tension forces that are required to expand a tubular cylindrical pipe.

It may be required to obtain a tube which can be deformed easily in an axial or in a radial direction or in both directions. A radially deformable tube is useful if the tube is for example to be used as an oil and/or gas production tubing which is to be inserted into a relatively narrow and irregularly shaped underground wellbore. An axially deformable tube is useful if the tube is a production liner or tubing, a well casing or other well tubular which is installed in a compacting reservoir where there is a risk of buckling of the well tubulars as a result of the compaction process.

If a radially deformable tube is required it is preferred that the wall of the tube is at least partly formed by a series of axial tubules which each extend in a direction substantially parallel to a longitudinal axis of the tube such that upon a radial deformation of the tube the axial tubules are at least partly deformed.

If an axially deformable tube is required it is preferred that the wall of the tube is at least partly formed by a series of toroidal tubules which extend in a substantially circular direction around a longitudinal axis of the tube such that upon axial deformation of the tube the toroidal tubules are at least partly flattened or otherwise deformed.

If a tube is required which is both axially and radially deformable, it is preferred that the wall of the tube is at least partly formed by one or more helical tubules which extend in a substantially helical direction with respect to a longitudinal axis of the tube such that upon deformation of the tube in a direction which is oriented at an angle relative to a longitudinal direction of each of the helical tubules, at least one of the helical tubules is deformed.

The tubules may be made of a metal, plastic, rubber or other material and may be welded, brazed, bonded or otherwise secured to adjacent tubules or other parts of the wall of the tube.

The tubules may before expansion have a folded, cylindrical, elliptical or prismatic shape and may as a result of the expansion be unfolded or flattened into an elliptical, cylindrical or prismatic shape.

Suitably, the tubules contain at the outer periphery of the tube openings or weak spots which open up as a result of the deformation process such that one or more fluids are squeezed from the interior of the tubules into the space surrounding the tube.

In that case the fluids that are squeezed from the interior of the tubules may contain one or more chemicals, such as a chemical treatment fluid or components of a liquid cement slurry or components of a curing agent, which components are only mixed when or after they have been squeezed out of the tubules.

### Brief description of the drawings

The invention will be described in more detail and by way of example with reference to the accompanying drawings, in which
Fig. 1 is a cross-axial sectional view of a tube both before and after expansion, which tube has a wall that is made of a series of axial tubules which are cylindrical before expansion and elliptical after expansion;
Fig. 2 is a cross-axial sectional view of a tube both before and after expansion, which tube has a wall that comprises a series of axial tubules which are prismatic before expansion and elliptical after expansion;
Fig. 3 is a cross-axial sectional view of a tube both before and after expansion, which tube has a wall that is made of a series of axial tubules which are elliptical both before and after expansion;
Fig. 4 is a cross-axial sectional view of a tube before expansion where the wall of the tube comprises a series of axial tubules and the tube is folded into a substantially flat shape before it is unfolded and expanded;
Fig. 5 is a longitudinal sectional view of a tube which comprises a wall that is made of a series of toroidal tubules;
Fig. 6 is an enlarged detail showing the cylindrical shape of three of the toroidal tubules that are encircled in Fig. 5;
Fig. 7 is a longitudinal sectional view of the tube of Fig. 5 after axial compression of the tube;
Fig. 8 is an enlarged detail showing the elliptical shape of three of the toroidal tubules that are encircled in Fig. 7;
Fig. 9 is a cross-axial sectional view of a radially expandable tube comprising six axial or helical tubules both before and after expansion of the tube;
Fig. 10 is a cross-axial sectional view of an unexpanded tube of which the wall comprises a series of folded tubules which unfold into a cylindrical shape during the process of expanding the tube;
Fig. 11 is a cross-axial sectional view of another unexpanded tube configuration where the wall comprises a series of folded tubes which unfold into a cylindrical shape during the process of expanding the tube; and
Fig. 12 is a cross-axial sectional view of an unexpanded tube which folds open during the expansion process and which comprises a tubule which acts as a plastic hinge and which is flattened as a result of the expansion process.

### Detailed description of the invention

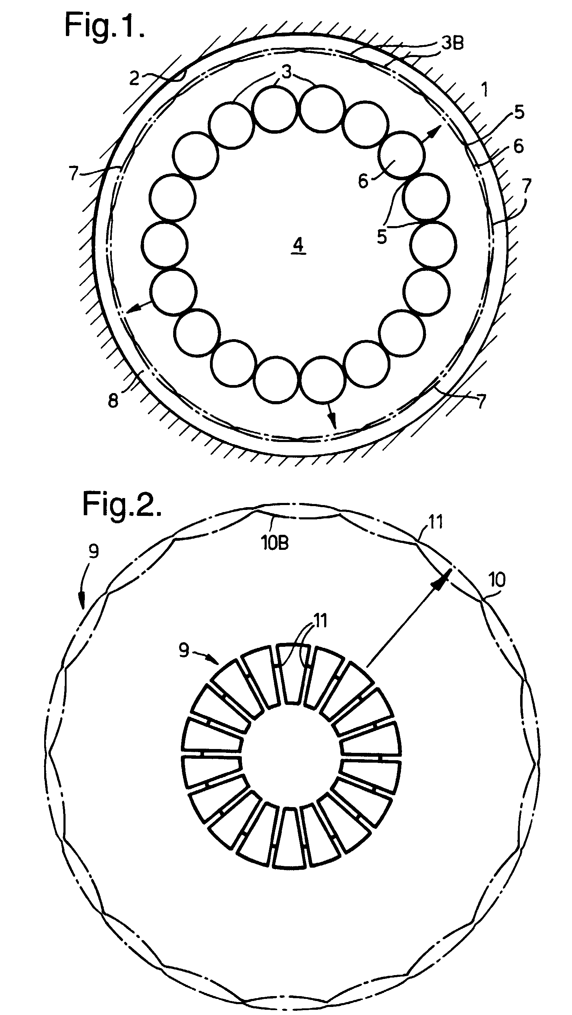

Referring now to Fig. 1 there is shown a tube 1 in a cylindrical wellbore or other cavity 2, which tube 1 has a wall that is made up of a series of axial tubules 3 which are substantially cylindrical before expansion of the tube 1 and elliptical after expansion of the tube 1 to an enlarged diameter, as illustrated by reference numeral 3B.

The tube 1 can be expanded by an expansion mandrel (not shown) or by increasing the hydraulic pressure in the interior 4 of the tube 1. As a result of the expansion process the tubules 3 are subject to a bending process so that relatively low forces are required.

If the tubules 3 are made of steel or another metal then it is preferred that the tubules 3 are sintered, welded or brazed together along the length of the areas 5 where the tubules 3 touch each other.

If the tubules 3 have an impermeable wall and the tube 1 is used temporarily in the cavity 2, for example to provide a temporary seal, then the tube 1 can be radially contracted again by pumping a high pressure fluid into the interiors 6 of the tubules 3, which will induce the flattened tubules 3B to resume their tubular shape, so that the tube 1 radial shrinks and can be easily removed from the cavity 2.

If the tube 1 is to be used permanently in the cavity 2, for example if the tube 1 is to be used as a well casing, then at least some of the tubules 3 may be filled with liquid components of a cement slurry or other curing agent, such as a silicone gel and the outer wall of these tubules may contain openings 7, or weak spots which are opened as a result of the expansion process, via which said liquid components are squeezed into the surrounding annular space 8 surrounding the expanded tube 1 and the liquid components mix up and cure to a hardened cement, silicone or other cured sealing composition.

Fig. 2 illustrates an alternative embodiment of the deformable tube according to the invention. This tube 9 is also radially deformable and comprises a series of tubules 10 which are prismatic before expansion and elliptical after expansion, as illustrated by reference numeral 10B.

The tubules 10 are arranged substantially parallel to the longitudinal axis 11 at the centre of the tube 9. The tubules 10 are made of steel or another metal and are connected to each other by longitudinal welded, brazed or sintered bonds 11.

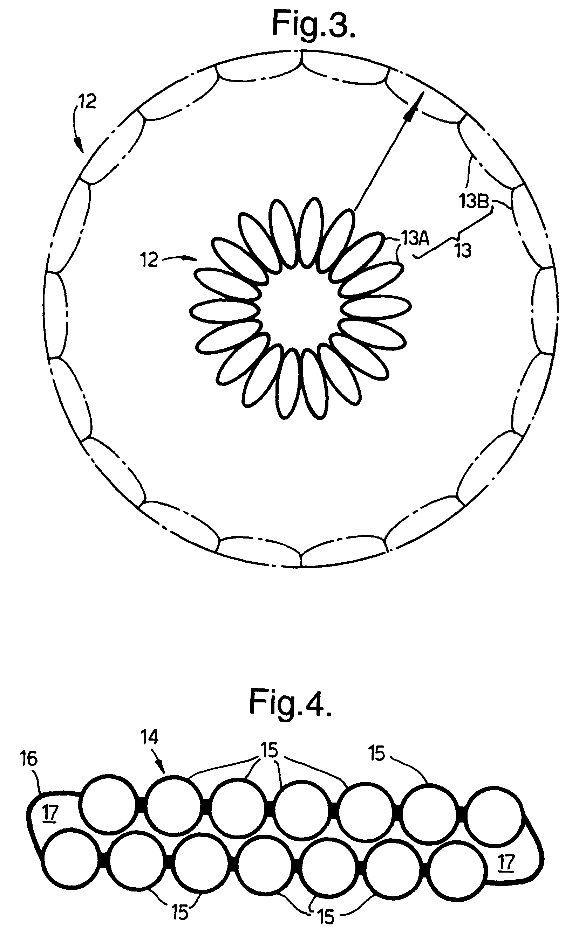

Fig. 3 shows yet another embodiment of the deformable tube according to the invention, in which the tube 12 is radially deformable and comprises a series of tubules 13 which are elliptical before and which have an elliptical, almost flattened shape after radial expansion of the tube 12.

In this embodiment the tubules 13 deform from a first elliptical shape, illustrated by reference numeral 13A in which the largest width of the elliptical tubules 13A has a radial orientation into a second elliptical shape, illustrated by reference numeral 13B in which the largest width of the elliptical tubules 13A has a tangential orientation.

Referring now to Fig. 4 there is shown a deformable tube 14 which comprises a series of axial tubules 15, wherein two pairs of tubules at opposite sides of the tube 14 are interconnected by plastic hinges 16. These plastic hinges 16 allow the tube 14 to be stored and transported in a flattened shape e.g. around a reeling drum (not shown).

When the tube 14 is then unreeled from the reeling drum it can be brought into a cylindrical shape by a guide funnel (not shown). If the tube 14 is to be used inside a well or inside another tubular the cylindrical tube 14 is then reeled into the wellbore or the interior of the other tubular and expanded for example by pumping a high pressure fluid into the interior 17 of the tube 14.

The initially flattened tube configuration shown in Fig. 4 allows an easy storage and transport of the tube 14, e.g. on a small diameter reeling drum, during the manufacturing stage and during transport from the manufacturing site to the site where the tube 14 is to be used.

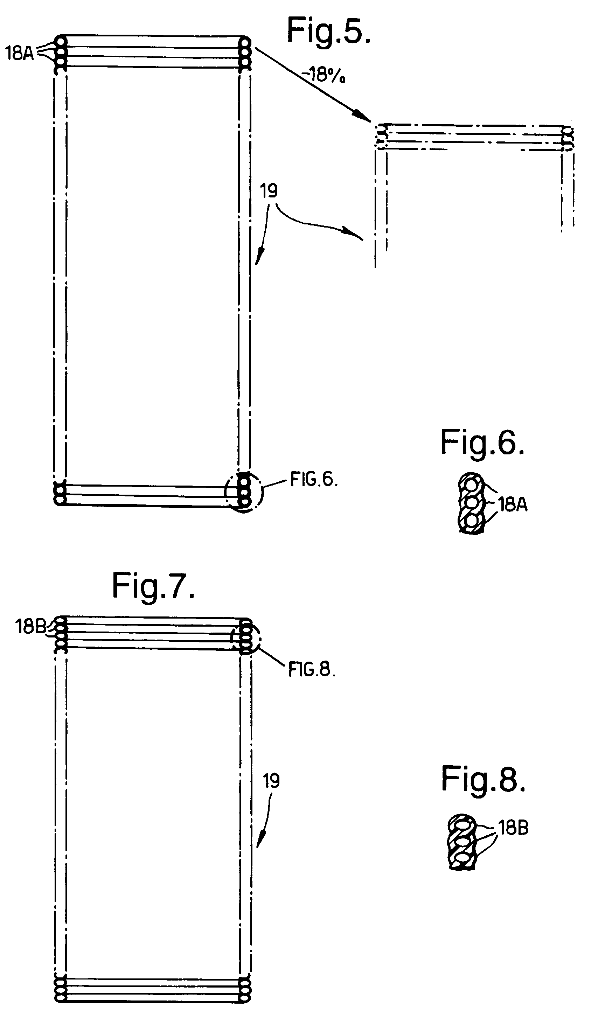

Figures 5, 6, 7 and 8 show yet another embodiment of the deformable tube according to the invention in which the tubules 18A, B have a toroidal shape in order to make the tube 19 axially deformable.

The tube 19 shown in Fig. 5 can be a production liner in a compacting oil or gas bearing formation, where as shown in detail in Fig. 6 the toroidal tubules 18A have a substantially cylindrical shape. In the configuration shown in Fig. 7 the tube 19 has axially contracted so that its length is 18% shorter than its original length shown in Fig. 5.

As a result of the axial contraction of the tube 19 the tubules 18B shown in Fig. 7 have been deformed into an elliptical shape, as is shown in more detail in Fig. 8.

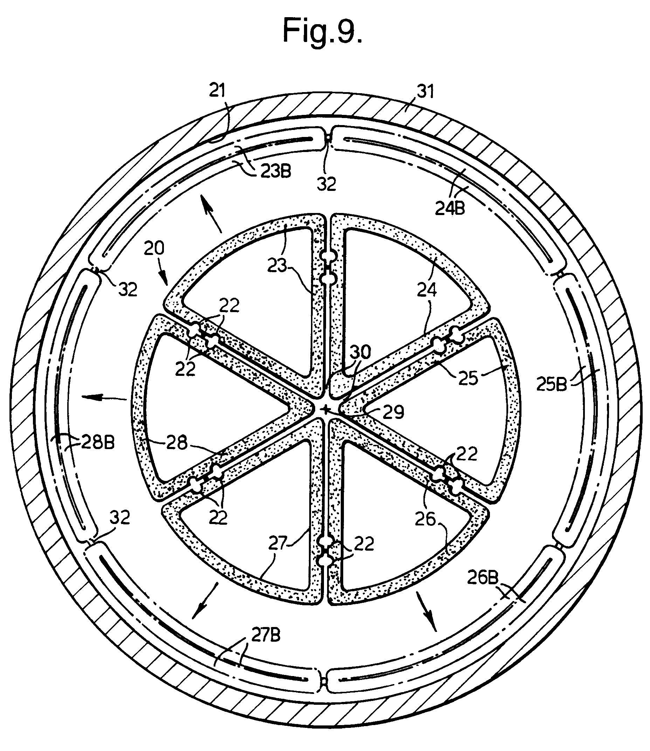

Referring now to Fig. 9 there is shown a tube 20 which is expanded within a wellbore 21 or other cavity.

The tube 20 has a wall that comprises six tubules 23, 24, 25, 26, 27 and 28 which extend in an axial or helical configuration relative to the longitudinal axis 29 of the tube 20.

Adjacent tubules 23, 24, 25, 26, 27 and 28 are interconnected along their length by elongate welds 32. Plastic hinges 22 are located in the walls of the tubules 23-28 at both sides of each weld 32.

The unexpanded tube 20 is shown at the centre of the drawing. The six unexpanded tubules 23-28 each have the form of a pie sector and only a minor gap 30 is present between adjacent tubules 23-28. To expand the tube 20 a pressurized fluid is pumped into the gaps 30 which will induce the tube 20 to expand until the walls of the tubules 23-28 are stretched and/or the outer walls of the tubules 23B-28B are pressed against the wellbore 21.

The volume-efficient tube configuration shown in Fig. 9 is attractive if the tube 20 is to be inserted into the wellbore 21 via a narrow excess, such as a small diameter production tubing. Furthermore the internal volume of the unexpanded tubules 23-28 is relatively large whereas the internal volume of the expanded tubules 23B-28B is relatively small so that if the walls at the outer circumference of the tubules 23-28 are perforated or become during expansion otherwise fluid permeable a relatively large volume of fluids is squeezed from the interior of the tubules 23-28 into the surrounding annulus and/or formation.

In this way a relatively large volume of a sealing agent and/or treatment fluid can be injected into the annulus surrounding the tube 20 and/or the formation 31 surrounding the wellbore 21.

The externally permeable tube 20 is very suitable to inject treatment fluids into an underground formation 31 which comprises along the length of the wellbore 21 layers of varying permeability. If the outer walls of the tubules 23-28 have a significantly lower fluid permeability than the surrounding formation 27, then, as soon as the outer wall of the tubules 22B-26B is pressed against the wellbore 21, a relatively constant flux of treatment fluid will be squeezed into the various surrounding formation layers so that the risk of injection of treatment fluid mainly into the permeable formation layers and by-passing of less permeable layers is minimized.

If the tube 20 is used as a treatment fluid injection tool then the outer walls of the tubules 23-28 may be made of a permeable rubber and/or a fabric and the inner walls of the tubules 23-28 which face the interior 30 of the tube 30 may be made of an impermeable rubber. After injection of the treatment fluids the pressure in the interior 30 of the tube 20 may be reduced so that the tube 20 radially contracts and can be removed from the borehole.

Instead of allowing the tube 20 to contract after fluids have been injected into the formation the tube 20 may be allowed to harden in the expanded position against the wellbore 21 by impregnating the fabric or other material with a slowly curing epoxy or other plastic composition, so that the solidified tube 20 then serves as a well liner.

The tube 20 and the tube configurations shown in Figs. 1-4 may also have walls that are made of a sieve material. In that case the tube may be expanded by an expansion cone or by a balloon that is inflated in the interior of the tube.

Since the sieve material that then forms the walls of tubules is mainly bent and not or hardly stretched the sieve opening size will remain fairly constant during the expansion process. The expanded tube of sieve material then serves as a filter that prevents sand and other solid materials to enter the wellbore 21.

The radially expandable tube 20 and the other radially expandable tube configurations shown in Figs. 1-4 may also be made of tubules 23-28 which are made of a fluid impermeable material, such as steel which only deforms if the pressure in the interior 30 of the tube exceeds a pre-set level. In that case the tube may be installed as a production tubing which serves as a downhole blow-out preventer which expands and seals of the annulus surrounding the production tubing if a blow-out occurs. The radially expandable tube configuration shown in Fig. 9 can also be used as a drill string. In that case drilling mud is pumped through the interior of the tubules 23A-28A during drilling. At the end of a drilling cycle high pressure fluid is injected into the interior 30 of the tube 20 so that the tube 20 is expanded against the borehole wall 21 and forms a lining of the wellbore and the drill bit and downhole motor assembly is pulled to the surface by a wireline or coiled tubing passing through the interior 30 of the tube 20 and also serves as an expansion cone.

If only minor expansion of the tube is required then the wall of the tube may be provided with only one or a few axial or helical tubules.

If the walls of the tube 20 or the other radially expandable configurations are made of a rubber or other elastically deformable material then the expanded tube may serve as a high expansion packer or bridge plug.

It will be understood that if the tubules are oriented in an axial direction a radially deformable tube will be obtained. If the tubules are oriented in a circumferential direction as shown in Figs. 5-8 then an axially deformable tube will be obtained.

If the tubules are oriented in a helical direction the tube will be deformable both in axial and radial directions and the pitch angle of the helical configuration of the tubules will then influence the degree in which the tube is axially or radially deformable.

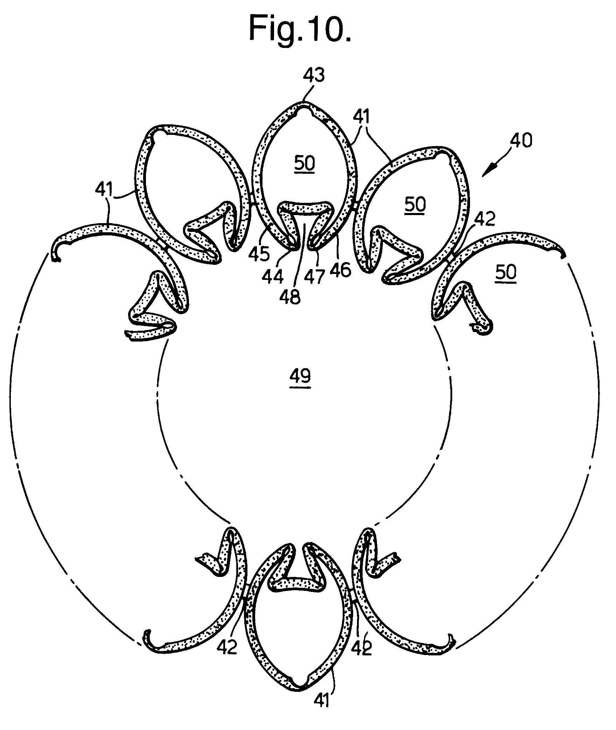

Fig. 10 shows a configuration where a tube 40 comprises a wall that consists of a series of axial foldable tubules 41.

If the tubules 41 are made of steel then they are interconnected side by side along their length by axial welds 42. Each tubule 41 comprises at the outer circumference of the tube 40 a single plastic hinge 43 and at the inner circumference of the tube 40 a set of four plastic hinges 44, 45, 46 and 47. Each of these plastic hinges 43-47 is formed by machining an axial groove in the inner and/or outer surface of the wall of the tubule 41.

The set of four plastic hinges 44-47 defines a wall segment where the tubules 41 can be folded inwardly to form a U- or delta-shaped recess 48 that faces the interior 49 of the tube 40.

The tube 40 is expanded by pumping a pressurized fluid into the interiors 50 of the tubules 41 which causes the tubules to unfold by hinging about the plastic hinges 43-47 so that the tubules 41 each obtain a cylindrical shape (not shown).

As a result of the unfolding of the tubules 41 the tube 40 obtains a larger external and internal diameter.

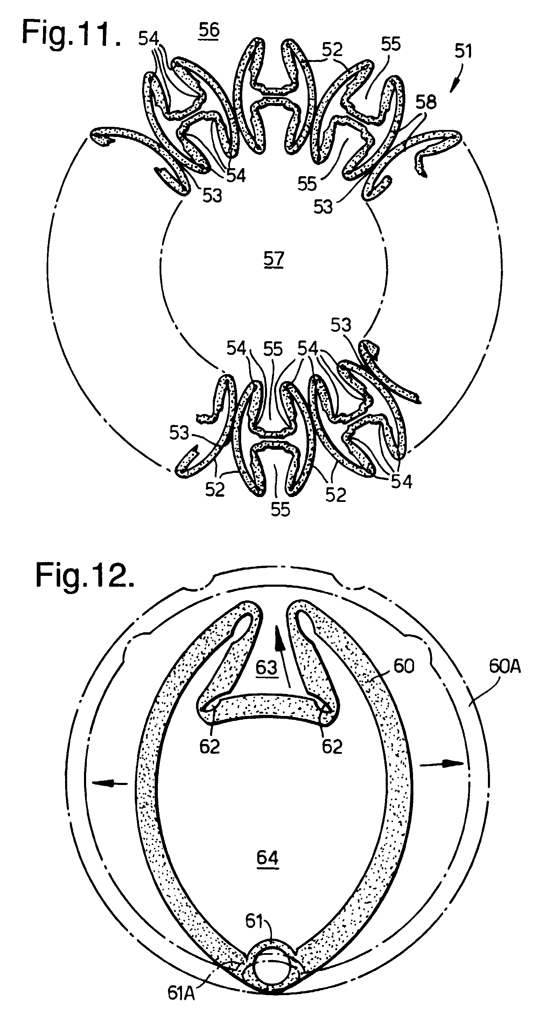

Fig. 11 shows another tube 51 which comprises a wall that consists of a series of axial foldable tubules 52.

If the tubules 52 are made of steel then they are interconnected side by side along their length by axial welds 53. Each tubule 52 comprises both at the outer and the inner circumference of the tube 51 a set of four plastic hinges 54 that are formed by machining axial grooves in the inner and/or outer surface of the wall of each tubule 52.

Each set of four plastic hinges 54 defines a wall segment where the tubules 52 can be folded inwardly to form a U- or delta-shaped recess 55 that faces either the exterior 56 or the interior 57 of the tube 51.

The tube 51 is expanded by pumping a pressurized fluid into the interiors 58 of the tubules 51 which causes the tubules 52 to unfold by hinging about the plastic hinges 54 so that the tubules each obtain a cylindrical shape (not shown).

As a result of the unfolding of the tubules the tube 51 obtains a larger external and internal diameter.

Fig. 12 shows a foldable tube 60 which comprises at its lower side a single plastic hinge that is formed by an axial tubule 61 and at its upper side a set of four plastic hinges 62 that are formed by machining axial grooves in the outer or inner surface of the wall of the tube 60.

The four plastic hinges 62 define a delta-shaped recess 63 at the upper side of the tube 60, when the tube is in its folded shape.

The tube 60 is unfolded by pumping a pressurized fluid into the interior 64 of the tube 60. This causes the tube to unfold in the direction of the arrows into the cylindrical shape which is illustrated by the broken lines 60A. The tubule 61 then acts as a plastic hinge and obtains as a result of the unfolding of the tube 60 the elliptical shape which is illustrated by broken lines 61A.

The tubule 61 is made of a plastically deformable material, such as a formable high-strength low-alloy or dual phase steel grade, which also provides flexibility to the tube 61 in circumferential direction during the unfolding procedure. After the unfolding procedure a curing agent may be pumped into the interior 65 of the elliptical tubule 61A to reinforce the tubule 61A. The interior 65 of the tubule 61 may comprise electrical and/or hydraulic conduits for transmission of electric and/or hydraulic power and/or signals along the length of the tube.

The embodiments of the deformable tube shown in the drawings provide a tube which can be deformed easily and which can be reeled on a reeling drum. The tube can be unreeled from the drum and injected into an underground borehole or other cavity in which the tube is to be used. The tube is subsequently deformed inside the borehole or other cavity by changing the tubular shape of one or more tubules in the wall of the tube. The deformation may involve flattening, unfolding or other deformation of the tubule or tubules.

## Claims

1. A deformable tube having a wall which is at least partly formed by a number of tubules, wherein at least one tubule is at least partly deformed in response to deformation of the tube.

2. The deformable tube of claim 1, wherein the wall of the tube is at least partly formed by a series of axial tubules which each extend in a direction substantially parallel to a longitudinal axis of the tube such that upon a radial deformation of the tube the axial tubules are at least partly deformed.

3. The deformable tube of claim 1, wherein the wall of the tube is at least partly formed by a series of toroidal tubules which extend in a substantially circular direction around a longitudinal axis of the tube such that upon axial deformation of the tube the toroidal tubules are at least partly deformed.

4. The deformable tube of claim 1, wherein the wall of the tube is at least partly formed by one or more helical tubules which extend in a substantially helical direction with respect to a longitudinal axis of the tube such that upon deformation of the tube in a direction which is oriented at an angle relative to a longitudinal direction of each of the helical tubules, at least one of the helical tubules is at least partly deformed.

5. The deformable tube of claim 1, wherein the wall of the tube is at least partly formed by a number of substantially parallel tubules which are arranged side by side and are connected to each other.

6. The deformable tube of claim 5, wherein the tubules are made of metal and the sides of a pair of adjacent tubules substantially touch each other and are sintered, welded, spot welded, brazed, bonded, or otherwise secured to each other.

7. The deformable tube of claim 5, wherein the tubules are made of a plastic or elastomeric material or a fabric and the sides of adjacent tubules substantially touch each other and are bonded to each other.

8. The deformable tube of claim 1, wherein before deformation of the tube the tubules have a substantially cylindrical shape and deform into a substantially elliptical or flattened shape in response to deformation of the tube.

9. The deformable tube of claim 1, wherein before deformation of the tube the tubules have a substantially prismatic shape and deform into a substantially flattened shape in response to deformation of the tube.

10. The deformable tube of claim 1, wherein the tubules contain at the outer periphery of the tube openings or weak spots which open up as a result of the deformation process such that one or more fluids are squeezed from the interior of the tubules into the space surrounding the tube.

11. The deformable tube of claim 10, wherein the fluids that are squeezed from the interior of the tubules contain one or more chemicals, such as components of a liquid cement slurry, components of a curing agent or a chemical treatment fluid.
